# EUROPEAN PATENT APPLICATION

(11) **EP 4 675 271 A1**
(43) Date of publication of application: **07.01.2026**
(21) Application number: 25185784.3
(22) Date of filing: 27.06.2025
(51) Int. Cl.: G01N 29/04, G01N 29/22, G01N 29/44, G01N 29/28, G01M 5/00

(54) **SENSOR ATTACHMENT STATE DETERMINATION APPARATUS, SENSOR ATTACHMENT STATE DETERMINATION SYSTEM, AND SENSOR ATTACHMENT STATE DETERMINATION METHOD**

(30) Priority: 01.07.2024 JP 2024106376
(71) Applicant: Kabushiki Kaisha Toshiba, Tokyo 105-0023 (JP)
(72) Inventor: USUI, Takashi, Minato-ku, Tokyo (JP); TAKAMINE, Hidefumi, Minato-ku, Tokyo (JP); UEDA, Yuki, Minato-ku, Tokyo (JP); WATABE, Kazuo, Minato-ku, Tokyo (JP); UENO, Keisuke, Minato-ku, Tokyo (JP)
(74) Representative: Hoffmann Eitle

(57) **Abstract**

According to one embodiment, a sensor attachment state determination apparatus, a sensor attachment state determination system, and a sensor attachment state determination method capable of determining an attachment state of a sensor with high accuracy. A sensor attachment state determination apparatus of an embodiment includes a signal processor, an index value acquirer, and a determiner. The signal processor is configured to acquire intensity information regarding signal intensities in different frequency bands of an elastic wave detected by one or more sensors configured to detect the elastic wave generated due to an impact applied by an impact applier configured to apply the impact on a structure. The determiner is configured to determine an attachment state of the one or more sensors on a basis of the intensity information acquired by the signal processor.

## Description

### FIELD

Embodiments described herein relate generally to a sensor attachment state determination apparatus, a sensor attachment state determination system, and a sensor attachment state determination method.

### BACKGROUND

In recent years, a problem with deterioration of infrastructure such as a bridge has become tangible. For this reason, there is an increasing need for a nondestructive inspection, and an AE method for detecting internal damage of a structure by detecting an elastic wave generated due to damage with a sensor (for example, acoustic emission (AE) sensor) that has high sensitivity and is sensitive to a high-frequency band is attracting attention. In the related art, a method for ascertaining a position of a generation source (hereinafter, referred to as an "elastic wave source") of an elastic wave and spatially diagnosing the presence or absence of internal damage of the structure for a surface using an elastic wave source density distribution based on a plurality of specified elastic wave sources has been suggested.

A sensor that is used in such a nondestructive inspection is attached to a surface of a structure to be measured directly by an adhesive or the like or indirectly via a jig or the like. However, attachment may be insufficient due to defective attachment work, change with time, or the like. If defective attachment occurs, since it becomes difficult for an elastic wave to reach the sensor, change in signal is caused. As a result, the change is difficult to distinguish from signal change caused by deterioration of the structure, and there is a problem with degradation of diagnosis accuracy or misdiagnosis. For this reason, when the sensor is installed, an elastic wave is generated in the vicinity of the sensor, and an attachment state is determined on the basis of an amplitude value when the elastic wave is detected by the sensor. For example, Patent Document 1 discloses a method that detects an elastic wave excited when a pulse is applied to a piezoelectric element, by a sensor and determines an attachment state on the basis of a peak frequency of the detected elastic wave.

Incidentally, in this method, even when the attachment state of the sensor is not good, the amplitude when the elastic wave excited in the vicinity of the sensor is detected may be sufficiently large, and an error may be caused in a determination result of the attachment state of the sensor. Furthermore, when the peak frequency is used, a slight difference in amplitude may cause a significant deviation of the peak frequency, and as a result, an error may be caused in the determination result of the attachment state of the sensor.

### BRIEF DESCRIPTION OF THE DRAWINGS

FIGS. 1A and 1B are diagrams illustrating an outline of sensor attachment state determination in the related art.
FIG. 2 is a diagram illustrating a content regarding roughness of a surface of a structure.
FIGS. 3A to 3F are diagrams illustrating a difference between elastic waves to be detected according to an installation state of a sensor.
FIG. 4 is a diagram illustrating a propagation path of an elastic wave.
FIGS. 5A and 5B are explanatory views regarding a surface wave and a body wave.
FIG. 6 is a diagram illustrating an example of a system configuration of a sensor attachment state determination system in an embodiment.
FIG. 7 is a flowchart illustrating a flow of processing that is performed by the sensor attachment state determination system in the embodiment.
FIG. 8 is a diagram showing an application result of a method in the embodiment.
FIG. 9 is a flowchart illustrating a flow of processing for achieving improvement of an attachment state in the sensor attachment state determination system in the embodiment.
FIGS. 10A and 10B are diagrams illustrating effects in the embodiment.

### DETAILED DESCRIPTION OF THE INVENTION

The present invention provides a sensor attachment state determination apparatus, a sensor attachment state determination system, and a sensor attachment state determination method capable of determining an attachment state of a sensor with high accuracy.

According to one embodiment, a sensor attachment state determination apparatus of an embodiment includes a signal processor, an index value acquirer, and a determiner. The signal processor is configured to acquire intensity information regarding signal intensities in different frequency bands of an elastic wave detected by one or more sensors configured to detect the elastic wave generated due to an impact applied by an impact applier configured to apply the impact on a structure. The determiner is configured to determine an attachment state of the one or more sensors on the basis of the intensity information acquired by the signal processor.

Hereinafter, a sensor attachment state determination apparatus, a sensor attachment state determination system, and a sensor attachment state determination method of an embodiment will be described with reference to the drawings.

### Description of Principle

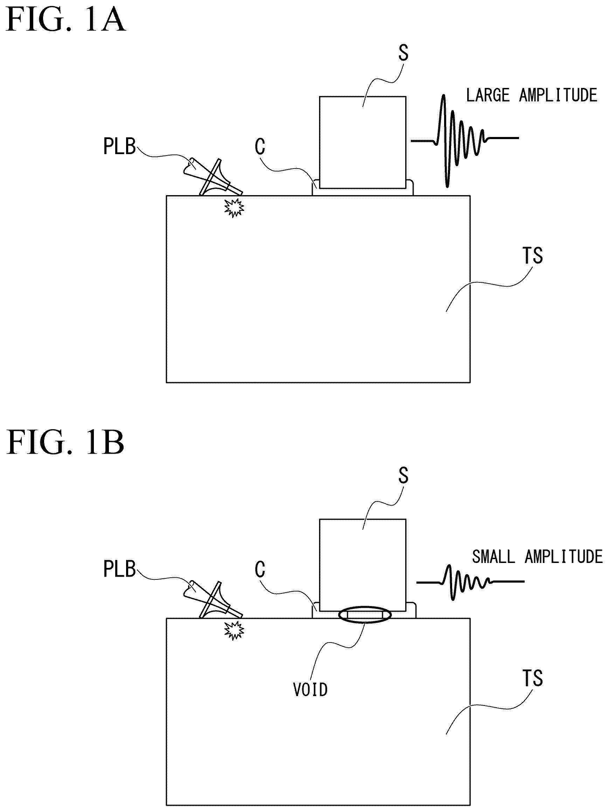

First, prior to describing the content of the embodiment, the outline of sensor attachment state determination in the related art will be described. FIGS. 1A and 1B are diagrams illustrating the outline of sensor attachment state determination in the related art. FIGS. 1A and 1B show a case where a sensor S is attached to a structure TS via a couplant C. For example, FIG. 1A illustrates a case where defective attachment including a void or the like in an attachment surface of the sensor S and the structure TS does not occur, and FIG. 1B illustrates a case where defective attachment including a void or the like in the attachment surface of the sensor S and the structure TS occurs.

In a state illustrated in FIG. 1A, an elastic wave generated by a pencil lead break (PLB) method is transmitted to the sensor S and is detected with sufficiently large amplitude. On the other hand, in a state illustrated in FIG. 1B, an elastic wave is attenuated and a detected amplitude is small. In the related art, it is said that an attachment state of the sensor S can be discriminated on the basis of a difference in amplitude.

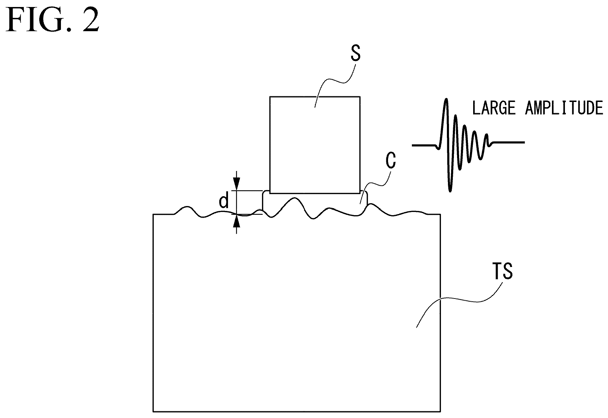

However, when roughness of a surface of a structure TS is large as illustrated in FIG. 2, a gel-like couplant C is applied to fill the roughness of the surface. As a result, while there is no void, a thickness d of the couplant C is large. In such a case, it is understood that an elastic wave excited by a PLB method in the vicinity is detected with sufficient amplitude. That is, a difference in thickness d of the couplant cannot be discriminated with the amplitude of the elastic wave generated by the pencil lead break method.

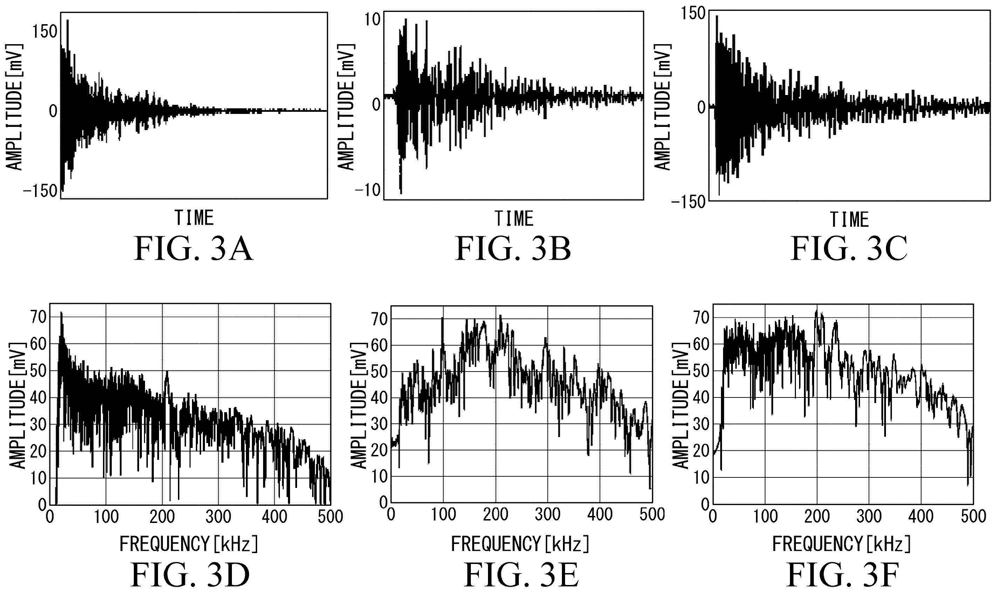

Here, a result of measuring a waveform of an elastic wave generated by the pencil lead break method for three specimens of a state in which the attachment state is good as in FIG. 1A, a state in which there is the void as in FIG. 1B, and a state in which the roughness of the surface is filled with a thick adhesive (for example, grease) as in FIG. 2 is illustrated in FIGS. 3A to 3F. FIG. 3A represents a waveform of an elastic wave measured in a state in which the attachment state is good, FIG. 3B represents a waveform of an elastic wave measured in a state in which there is the void, and FIG. 3C represents a waveform of an elastic wave measured in a state in which the roughness of the surface is filled with the thick adhesive (for example, grease). FIG. 3D represents a spectrum waveform of an elastic wave measured in a state in which the attachment state is good, FIG. 3E represents a spectrum waveform of an elastic wave measured in a state in which there is the void, and FIG. 3F represents a spectrum waveform of an elastic wave measured in a state in which the roughness of the surface is filled with a thick adhesive (for example, grease).

It is understood that, in a state in which there is the void as illustrated in FIG. 3B, amplitude decreases compared to other states, and amplitude is improved in a state in which the roughness of the surface is filled with the thick adhesive as illustrated in FIG. 3C. Here, in comparison of the spectrums of the waveform of the elastic wave illustrated in FIG. 3A and the waveform of the elastic wave illustrated in FIG. 3C, it is understood that, while a frequency characteristic shows concentration on a low-frequency domain near 20 kHz as illustrated in FIG. 3D in a state in which the attachment state is good, a frequency characteristic is comparatively flat as illustrated in FIG. 3F in a state in which the roughness of the surface is filled with the thick adhesive (for example, grease).

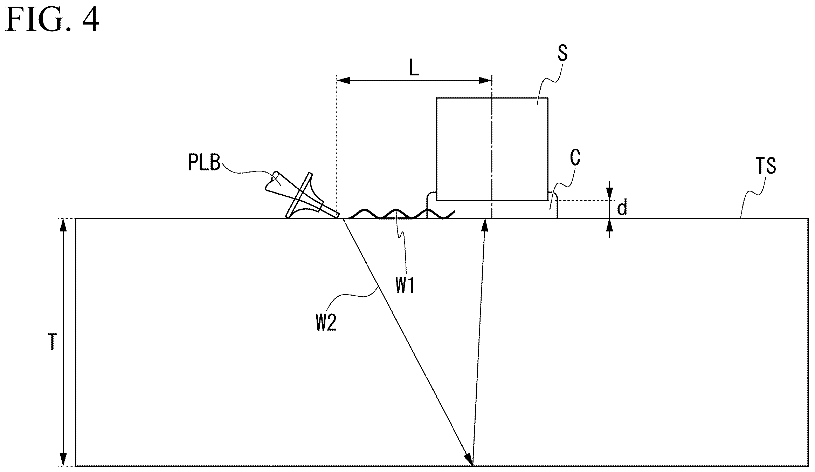

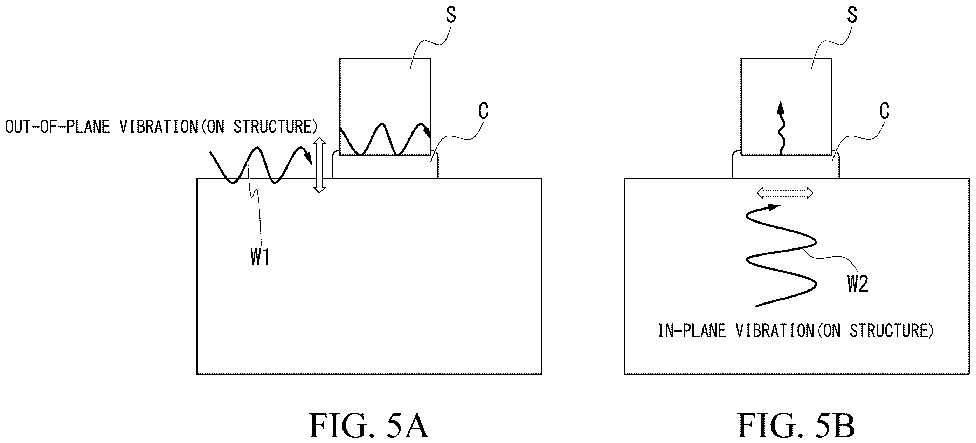

The reason for the above description can be explained as shown in FIGS. 4 and 5. FIG. 4 is a diagram illustrating a propagation path of an elastic wave. As illustrated in FIG. 4, an elastic wave excited by PLB includes two waves of a surface wave W1 that propagates on the surface of the structure TS and a body wave W2 that propagates through the structure TS, is reflected, and reaches the sensor S. The surface wave W1 reaches the sensor S earlier. The surface wave W1 is a Rayleigh wave with out-of-plane vibration of the surface of the structure TS and is transmitted to the sensor S via the couplant C. On the other hand, the body wave W2 that is incident on the sensor S substantially perpendicularly is composed of a longitudinal wave (p-wave) and a transverse wave (s-wave). The transverse wave with large amplitude is a wave that vibrates vertically in a traveling direction, and vibrates in an in-plane direction of the surface of the structure TS.

FIGS. 5A and 5B are explanatory views regarding the surface wave W1 and the body wave W2. As illustrated in FIG. 5A, since the surface wave W1 is a direct wave, the surface wave W1 is detected with sufficient amplitude by the sensor S. Normally, when the couplant C for which gel or a liquid is used has a large thickness, the transverse wave is conspicuously difficult to propagate through the couplant C. For this reason, as illustrated in FIG. 5B, the amplitude of the body wave W2 that reaches the sensor S is attenuated. When the thickness of the couplant C is large, the surface wave that is a direct wave is detected with sufficient amplitude, and the attenuation of the body wave reflected by an opposite surface of the structure is relatively large. Since peak amplitude is determined by the surface wave that directly reaches, even when the thickness of the couplant C is large, the peak amplitude is not significantly changed. However, in an actual elastic wave, a body wave is a main constituent and is significantly attenuated by the thickness of the couplant C.

Here, the frequency of the body wave is focused on. When a thickness T of the structure TS is set to be sufficiently greater than an interval L between a generation source (here, a position of PLB) of the elastic wave and the sensor S, a propagation length of the body wave is longer than that of the surface wave. As a result, a high-frequency component is affected by scattering or attenuation, and the high-frequency component decreases due to the effect of a low-pass filter. When the attachment of the sensor S is good and the body wave is detected, a low-frequency component of the body wave is added in addition to the direct wave. When the attachment state of the sensor S is defective, and the propagation of the body wave is impeded, a high-frequency component of the direct wave relatively increases. This phenomenon is also supported by the result of FIGS. 3A to 3F. That is, it is understood that the attachment state of the sensor S can be discriminated on the basis of a magnitude relationship of at least a low-frequency component and a high-frequency component of a frequency spectrum.

The low-frequency component described herein is a component in the vicinity of a cutoff frequency of a high-pass filter in an existing AE measurement device. Normally, the cutoff frequency of the high-pass filter is set to be equal to or lower than a resonance frequency fr of the sensor S and is suitably equal to or lower than fr/2. The high-frequency component is a high-frequency component of an elastic wave excited by PLB and is normally in a range of 100 kHz to 1 MHz. As an example, when the sensor resonance frequency is 50 kHz, a component in the vicinity of 20 kHz can be set as a low-frequency component, and a component in the vicinity of 100 kHz can be set as a high-frequency component.

Accordingly, in the present embodiment, the attachment state of the sensor is determined on the basis of information in a plurality of different frequency bands of the elastic wave, not a peak frequency. Hereinafter, a specific method will be described while illustrating the embodiment.

### Embodiment

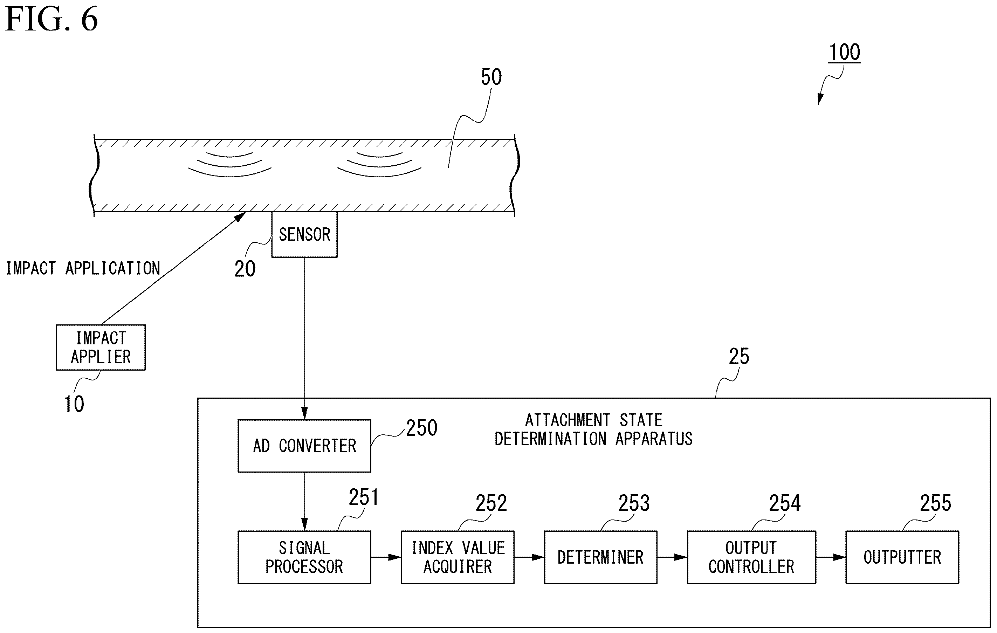

FIG. 6 is a diagram illustrating an example of a system configuration of a sensor attachment state determination system 100 in an embodiment. Te sensor attachment state determination system 100 is a system that determines an attachment state of a sensor attached to a structure. In the present embodiment, while a bridge will be described as an example of the structure, the structure does not need to be limited to the bridge. For example, the structure may be any structure as long as any structure generates an elastic wave due to the occurrence or the progress of a crack or due to an external impact (for example, rain or artificial rain). The bridge is not limited to a structure that is built over a river, a valley, or the like, and includes various structures (for example, a viaduct on a highway) provided above the ground. The structure may be a plate-shaped member.

An example of damage that affects evaluation of a deterioration state of a structure 50 is damage inside the structure that obstructs propagation of an elastic wave such as a crack, a cavity, and sedimentation. Here, the crack includes a vertical crack, a horizontal crack, a diagonal crack, and the like. The vertical crack is a crack that occurs in a direction perpendicular to a road surface. The horizontal crack is a crack that occurs in a direction horizontal to the road surface. The diagonal crack is a crack that occurs in a direction other than the directions horizontal and perpendicular to the road surface. The sedimentation is deterioration in which concrete turns into earth and sand mainly at a boundary portion between asphalt and a concrete slab.

The sensor attachment state determination system 100 includes an impact applier 10, a sensor 20, and an attachment state determination apparatus 25. The sensor 20 and the attachment state determination apparatus 25 are connected to perform communication in a wired or wireless manner. An amplification circuit such as a preamplifier or a noise filter circuit that eliminate noise may be provided between the sensor 20 and the attachment state determination apparatus 25 as necessary. In FIG. 6, while a case where the number of sensors 20 is one is illustrated, a plurality of sensors 20 may be provided.

The impact applier 10 applies an impact on the structure 50. Applying the impact on the structure 50 means, in other words, exciting an elastic wave. As a method (elastic wave excitation means) with which the impact applier 10 applies the impact, a method with which an elastic wave including a frequency component higher than a resonance frequency of the sensor 20 can be generated is desirably used. For example, a method such as a PLB method, steel ball hitting, water droplet scattering, or pulse excitation using a piezoelectric element may be used. This is an example, and the method (elastic wave excitation means) with which the impact applier 10 applies the impact may be a method with which the elastic wave including the frequency component higher than the resonance frequency of the sensor 20 can be generated.

The impact applier 10 applies an impact on the structure 50 in the vicinity of the sensor 20 to be a determination target of an attachment state, for example. The sensor 20 to be the determination target of the attachment state is at least one sensor 20 that is installed on the structure 50. The vicinity of the sensor 20 is desirably less than one wavelength of an excited elastic wave. As a representative example, when the resonance frequency of the sensor 20 is set to 50 kHz, and a speed at which an elastic wave travels in the structure 50 (for example, concrete) is set to 3000 m/s, a range within 60 mm can be set as a standard.

The sensor 20 is attached onto a surface of the structure 50 to be a target of deterioration evaluation by an adhesive such as grease or a couplant. The surface of the structure 50 on which the sensor 20 is installed may be a traveling surface on which a vehicle or the like travels, may be a surface (a bottom surface of the structure) opposite to the traveling surface, or may be a side surface of the structure 50. The sensor 20 has a piezoelectric element and detects an elastic wave generated due to the impact applied by the impact applier 10. The sensor 20 converts the detected elastic wave into an analog electrical signal (hereinafter, referred to as an "analog signal") and outputs the analog electrical signal to the attachment state determination apparatus 25. In the following description, an example where the sensor 20 is installed on the bottom surface of the structure 50 will be described.

For the sensor 20, a piezoelectric element having sensitivity to a range of, for example, 10 kHz to 1 MHz is used. While the type of the sensor 20 includes a resonance type in which a resonance peak is in a frequency range, a broadband type in which resonance is suppressed, and the like, any type of the sensor 20 may be used. While a method with which the sensor 20 detects the elastic wave includes a voltage output type, a resistance change type, a static capacitance type, and the like, any detection method may be used. The sensor 20 is, for example, an AE sensor.

The sensor 20 is not limited to the AE sensor, and other sensors may be used. For example, an acceleration sensor may be used instead of the sensor 20. In this case, the acceleration sensor detects an elastic wave that is generated inside the structure 50. Then, the acceleration sensor converts the detected elastic wave into an analog signal by performing processing similar to the sensor 20.

The attachment state determination apparatus 25 determines an attachment state of the sensor 20 on the basis of the elastic wave detected by the sensor 20. The attachment state determination apparatus 25 includes an AD converter 250, a signal processor 251, an index value acquirer 252, a determiner 253, an output controller 254, and an outputter 255.

The AD converter 250 receives the analog signal output from the sensor 20 as an input. The AD converter 250 performs analog-digital conversion on the input analog signal. With this, the AD converter 250 converts the input analog signal into a digital signal. The AD converter 250 outputs the digital signal after conversion to the signal processor 251.

The signal processor 251 is configured using a digital circuit. The digital circuit is realized by, for example, a field programmable gate array (FPGA) or a microcomputer. The digital circuit may be realized by dedicated large-scaled integration (LSI). The signal processor 251 may incorporate a non-volatile memory such as a flash memory or a detachable memory. The signal processor 251 receives the digital signal output from the AD converter 250 as an input. The signal processor 251 performs signal processing on the input digital signal.

The signal processor 251 extracts a signal waveform corresponding to the elastic wave on the basis of a trigger signal indicating that an amplitude value of the digital signal exceeds a prescribed threshold. Next, the signal processor 251 converts a signal waveform of a time domain into a frequency spectrum that is a signal waveform of a frequency domain, by fast Fourier transform (FFT) processing on the signal waveform.

The signal processor 251 acquires intensity information regarding signal intensities in different frequency bands of the elastic wave using the frequency spectrum. Here, the different frequency bands are, for example, two or more frequency bands, and are, for example, a frequency band (hereinafter, referred to as a "low-frequency band") including a low-frequency component and a frequency band (hereinafter, referred to as a "high-frequency band") including a high-frequency component. The low-frequency band corresponds to a first frequency band in the clams, and the high-frequency band corresponds to a second frequency band in the claims.

In the following description, a case where the low-frequency band is a range of 20 kHz to 40 kHz, and the high-frequency band is a range of 90 kHz to 110 kHz will be described as an example. The range of the low-frequency band and the range of the high-frequency band are not limited to the above-described example, and may be set as appropriate. Preferably, the low-frequency band is a range in the vicinity of 20 kHz, and the high-frequency band is a range in the vicinity of 100 kHz. The signal processor 251 acquires intensity information in the low-frequency band while setting a lowest frequency among the different frequency bands to a frequency lower than the resonance frequency of the sensor 20. The signal processor 251 acquires intensity information in the high-frequency band while setting a highest frequency among the different frequency bands to a frequency higher than the resonance frequency of the sensor 20.

The intensity information regarding the signal intensities is statistics (for example, average values or maximum values of amplitude) of amplitude or energy, for example. In the present embodiment, a case where the signal processor 251 acquires intensity information regarding a signal intensity in each of the low-frequency band and the high-frequency band will be described.

The signal processor 251 calculates average amplitude in the low-frequency band (for example, 20 kHz to 40 kHz) and average amplitude in the high-frequency band (for example, 90 kHz to 110 kHz) using the frequency spectrum after conversion, for example. The signal processor 251 calculates a maximum value in the low-frequency band (for example, 20 kHz to 40 kHz) and a maximum value in the high-frequency band (for example, 90 kHz to 110 kHz) using the frequency spectrum after conversion, for example. The signal processor 251 calculates energy in the low-frequency band (for example, 20 kHz to 40 kHz) and energy in the high-frequency band (for example, 90 kHz to 110 kHz) using the frequency spectrum after conversion, for example.

The index value acquirer 252 acquires an index value for determining the attachment state of each sensor 20 on the basis of the intensity information acquired by the signal processor 251. The index value is a numerical value indicating the goodness of the attachment state of the sensor 20, and the index value can be set as a numerical value indicating that, as the numerical value is greater, the attachment state is good, and as the numerical value is smaller, the attachment state is defective. The index value acquirer 252 acquires, as the index value, a value (the value indicated by the intensity information in the low-frequency band / the value indicated by the intensity information in the high-frequency band) of a ratio of a value indicated by the intensity information in the low-frequency band to a value indicated by the intensity information in the high-frequency band or a value of a difference (the value indicated by the intensity information in the low-frequency band - the value indicated by the intensity information in the high-frequency band) between the value indicated by the intensity information in the low-frequency band and the value indicated by the intensity information in the high-frequency band.

When the intensity information is a statistic of amplitude, the index value acquirer 252 acquires, as the index value, a value of a ratio of a statistic of amplitude in the low-frequency band and a statistic of amplitude in the high-frequency band or a value of a difference between the statistic of amplitude in the low-frequency band and the statistic of amplitude in the high-frequency band. When the intensity information is energy, the index value acquirer 252 acquires, as the index value, a value of a ratio of energy in the low-frequency band to energy in the high-frequency band or a value of a difference between the energy in the low-frequency band to the energy in the high-frequency band.

The determiner 253 determines the attachment state of each sensor 20 on the basis of the index value acquired by the index value acquirer 252. Specifically, the determiner 253 determines that the attachment state of the sensor 20 for which the index value is equal to or less than a determination threshold determined in advance is defective. When the index value is acquired on the basis of the value of the ratio, the determination threshold is, for example, 1. When the index value is acquired on the basis of the value of the difference, the determination threshold is, for example, 0.

Here, a state in which the attachment state is defective is, for example, a case where there is a void or the like in an attachment surface and a part of the sensor 20 is not attached to the structure 50 or a case where an adhesive is too thick and is likely to reduce the detection accuracy of the elastic wave. The determiner 253 determines that the attachment state of the sensor 20 for which the index value is greater than the determination threshold determined in advance is good.

The output controller 254 causes the outputter 255 to output information based on a determination result of the determiner 253. For example, when the determination result of the determiner 253 indicates that the attachment state of the sensor 20 is good, the output controller 254 causes the outputter 255 to output information indicating that the attachment state of the sensor 20 is good. For example, when the determination result of the determiner 253 indicates that the attachment state of the sensor 20 is defective, the output controller 254 causes the outputter 255 to output information for prompting a user to polish the surface of the structure 50 along with identification information of the sensor 20.

When the determination result of the determiner 253 indicates that the attachment state of the sensor 20 is defective, in the same sensor 20 continuously a prescribed number of times (for example, two times), the output controller 254 causes the outputter 255 to output information for prompting the user to change an installation position of the sensor 20.

The outputter 255 outputs information based on the determination result of the determiner 253 by a predetermined method under the control of the output controller 254. The outputter 255 may display information on a screen or may print and output information on a medium.

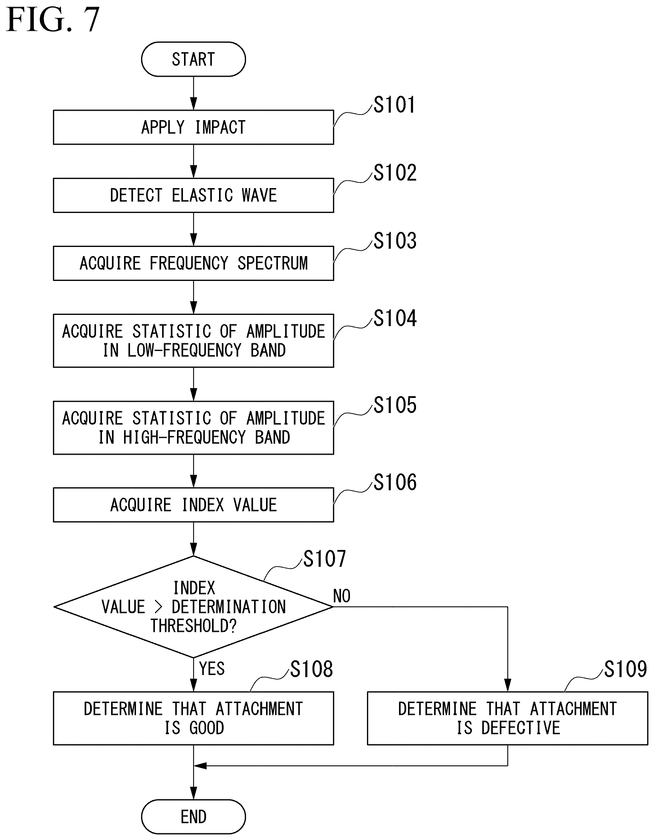

FIG. 7 is a flowchart illustrating a flow of processing that is performed by the sensor attachment state determination system 100 in the embodiment. In FIG. 7, while a case where the statistic of the amplitude is acquired as the intensity information will be described as an example, similar processing is performed even in a case where the energy is acquired as the intensity information. When a plurality of sensors 20 are provided, the processing illustrated in FIG. 7 may be executed for each sensor 20.

The impact applier 10 applies an impact on the structure 50 in the vicinity of the sensor 20 to be a determination target of the attachment state according to an operation of the user (Step S101). An elastic wave is generated due to the impact applied by the impact applier 10. The sensor 20 detects the generated elastic wave (Step S102). The sensor 20 converts the detected elastic wave into an analog signal and outputs the analog signal to the attachment state determination apparatus 25. The AD converter 250 in the attachment state determination apparatus 25 converts the input analog signal into a digital signal. The AD converter 250 outputs the digital signal after conversion to the signal processor 251.

The signal processor 251 extracts a signal waveform corresponding to the elastic wave on the basis of a trigger signal indicating that an amplitude value of the digital signal output from the AD converter 250 exceeds a prescribed threshold. The signal processor 251 acquires a frequency spectrum by performing fast Fourier transform on the extracted signal waveform (Step S103). The signal processor 251 acquires a statistic of amplitude in a low-frequency band using the acquired frequency spectrum (Step S104). For example, the signal processor 251 acquires the statistic of the amplitude in the low-frequency band by acquiring values of the amplitude in the range of the low-frequency band of the acquired frequency spectrum and calculating an average value of the acquired values of the amplitude in the range of the low-frequency band or selecting a maximum value.

The signal processor 251 acquires a statistic of amplitude in the high-frequency band using the acquired frequency spectrum (Step S105). For example, the signal processor 251 acquires the statistic of the amplitude in the high-frequency band by acquiring values of the amplitude in the range of the high-frequency band of the acquired frequency spectrum and calculating an average value of the acquired values of the amplitude in the range of the high-frequency band or selecting a maximum value. The signal processor 251 outputs the acquired statistic of the amplitude in the low-frequency band and the acquired statistic of the amplitude in the high-frequency band to the index value acquirer 252.

The index value acquirer 252 acquires an index value on the basis of the statistic of the amplitude in the low-frequency band and the statistic of the amplitude in the high-frequency band output from the signal processor 251 (Step S106). For example, the index value acquirer 252 acquires, as the index value, a value of a ratio of the statistic of the amplitude in the low-frequency band to the statistic of the amplitude in the high-frequency band or a value of a difference between the statistic of the amplitude in the low-frequency band and the statistic of the amplitude in the high-frequency band. The index value acquirer 252 outputs the acquired index value to the determiner 253.

The determiner 253 compares the index value output from the index value acquirer 252 with the determination threshold. The determiner 253 determines whether the index value is greater than the determination threshold (Step S107). When the determiner 253 determines that the index value is greater than the determination threshold, the determiner 253 determines that the attachment state of the sensor 20 as an acquisition source of the elastic wave is good (Step S108). The determiner 253 outputs, to the output controller 254, a determination result indicating that the attachment state of the sensor 20 is good.

On the other hand, when the determiner 253 determines that the index value is equal to or smaller than the determination threshold, the determiner 253 determines that the attachment state of the sensor 20 as the acquisition source of the elastic wave is defective (Step S109). The determiner 253 outputs, to the output controller 254, a determination result indicating that the attachment state of the sensor 20 is defective.

### Application Example

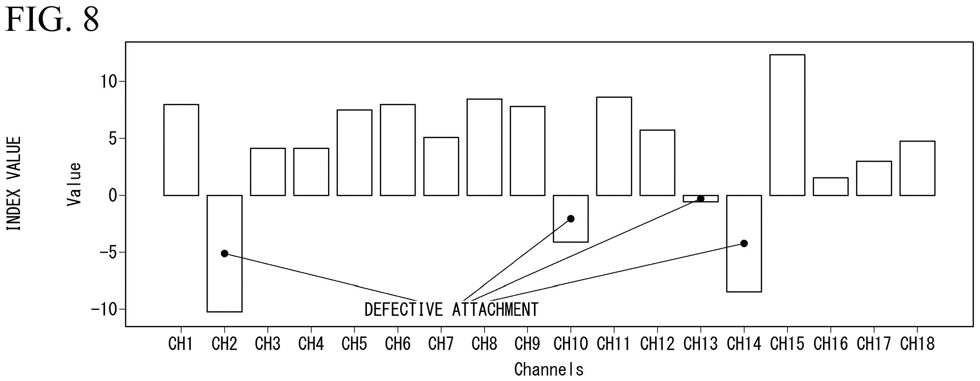

A case where the above-described method is applied in an actual bridge is illustrated in FIG. 8. FIG. 8 is a diagram illustrating an application result of the method in the embodiment. In an experiment in the actual bridge, 18 sensors 20 are installed on the structure 50. As illustrated in FIG. 8, index values of four sensors corresponding to Ch2, Ch10, Ch13, and Ch14 among the 18 sensors 20 are negative. Accordingly, the attachment state determination apparatus 25 determines that defective attachment occurs in the four sensors 20 corresponding to Ch2, Ch10, Ch13, and Ch14 for which the index value is negative.

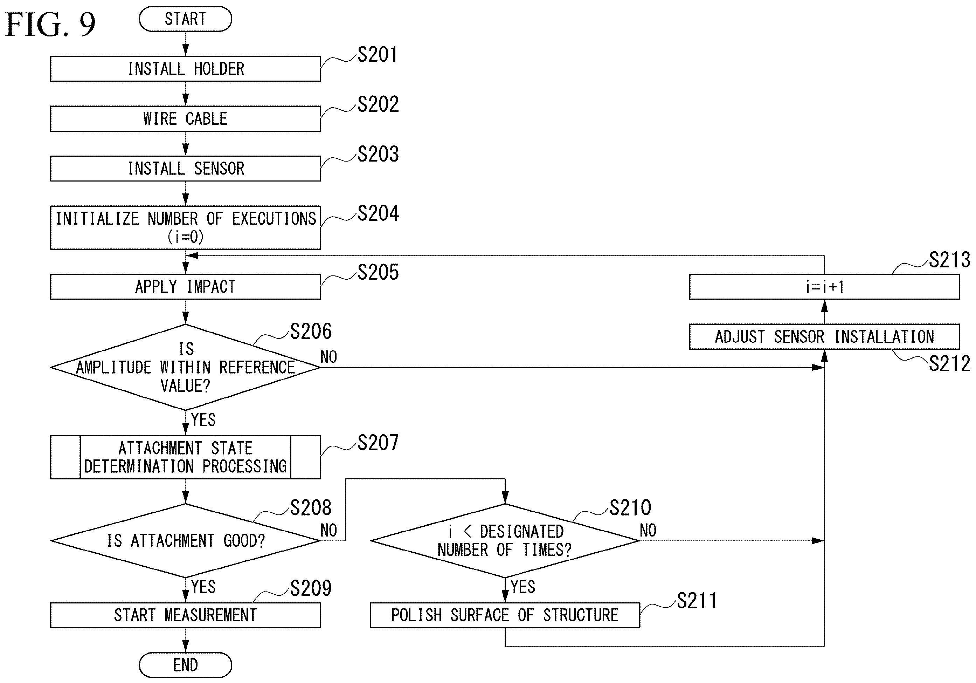

FIG. 9 is a flowchart illustrating a flow of processing for achieving improvement of an attachment state in the sensor attachment state determination system 100 in the embodiment. In FIG. 9, description will be provided partially including manual processing. When a plurality of sensors 20 are provided, the processing illustrated in FIG. 9 may be executed for each sensor 20.

The user installs a holder for installing the sensor 20 on the structure 50 (Step S201). The user wires a cable to the installed holder (Step S202). The user installs the sensor 20 in the installed holder (Step S203). Thereafter, the number of executions is initialized (i = 0) (Step S204). The impact applier 10 applies an impact on the structure 50 in the vicinity of the sensor 20 to be a determination target of an attachment state according to an operation of the user (Step S205). The sensor 20 detects a generated elastic wave. The sensor 20 converts the detected elastic wave into an analog signal and outputs the analog signal to the attachment state determination apparatus 25. The AD converter 250 provided in the attachment state determination apparatus 25 converts the input analog signal into a digital signal. The AD converter 250 outputs the digital signal after conversion to the signal processor 251.

The signal processor 251 determines whether an amplitude value of the digital signal output from the AD converter 250 is within a reference value (Step S206). This processing is processing for checking whether a signal is correctly detected in the sensor 20, prior to determining the attachment state of the sensor 20. The reference value may be, for example, equal to or smaller than a prescribed threshold to be a trigger of elastic wave detection. When the signal processor 251 determines that the amplitude value of the digital signal is within the reference value (Step S206 - YES), the attachment state determination apparatus 25 performs attachment state determination processing (Step S207). The attachment state determination processing is the processing after Step S102 illustrated in FIG. 7.

The user determines whether a result output from the outputter 255 in the attachment state determination processing indicates that the attachment is good (Step S208). When the result output from the outputter 255 indicates that the attachment is good (Step S208 - YES), the user starts AE measurement on the structure 50 (Step S209). On the other hand, when the result output from the outputter 255 does not indicate that the attachment is good (Step S208 - NO), the user determines whether the number of executions i is less than a designated number of times (Step S210).

When the number of executions i is less than the designated number of times (Step S210 - YES), the user polishes the surface of the structure 50 on which the sensor 20 is installed (Step S211). Thereafter, the user adjusts an installation position of the sensor 20 (Step S212). For example, the user provides the sensor 20 again on the polished surface of the structure 50 after Step S211. Thereafter, the user adds a value of 1 to the number of executions i and executes the processing of Step S205.

When the signal processor 251 determines that the amplitude value of the digital signal is not within the reference value in the processing of Step S206 (Step S206 - NO) or when the number of executions i is equal to or greater than the designated number of times (Step S210 - NO), it is assumed that the installation position of the sensor 20 is bad. For this reason, the user adjusts the installation position of the sensor 20 (Step S212). In this case, the user provides the sensor 20 at a place different from a place where the sensor 20 is installed. Thereafter, the user adds a value of 1 to the number of executions i and executes the processing of Step S205.

With the sensor attachment state determination system 100 configured as above, the attachment state determination apparatus 25 includes the signal processor 251 configured to acquire the intensity information in the different frequency bands of the elastic wave detected by one or more sensors 20 configured to detect the elastic wave generated due to the impact applied by the impact applier 10 configured to apply the impact on the structure 50, and the determiner 253 configured to determine the attachment state of one or more sensors 20 on the basis of the intensity information acquired by the signal processor 251.

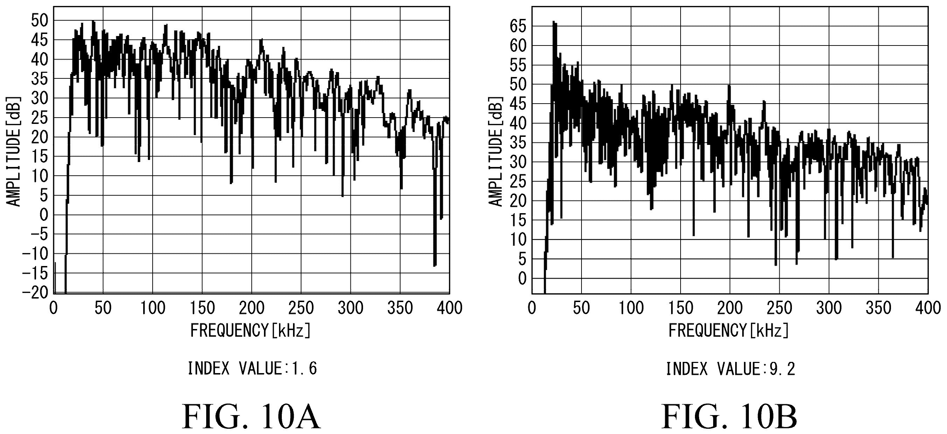

With the sensor attachment state determination system 100 configured as above, an example of an effect of actually improving the attachment state of the sensor 20 is illustrated in FIGS. 10A and 10B. In this case, the reference value for determining whether the result indicates that the attachment is good is set to 3.0. FIG. 10A illustrates a frequency spectrum when the sensor 20 is attached to a rough concrete surface and an elastic wave generated by a PLB method is detected. The index value in this case is 1.6. Since the index value falls below the reference value, the polishing processing of the structure is performed according to the same procedure. After polishing, a frequency spectrum when an elastic wave generated by the PLB method again is detected is illustrated in FIG. 10B. The index value in this case becomes 9.2, and it is confirmed that the index value exceeds the reference value. A good attachment state can be secured by the same system. In this way, the attachment state determination apparatus 25 determines the attachment state of the sensor 20 on the basis of the intensity information (the statistic of the amplitude or the energy) in the different frequency band of the elastic wave, not the peak frequency as in the related art. For this reason, the attachment state determination apparatus 25 determines the attachment state of the sensor 20 on the basis of the relationship between the intensity information of the different frequency bands. Accordingly, even when slight deviation is caused by an influence of noise or the like, it is possible to determine the attachment state of the sensor with high accuracy.

### (Modification Example 1)

In the above-described embodiment, while a configuration in which the AD converter 250, the signal processor 251, the index value acquirer 252, the determiner 253, the output controller 254, and the outputter 255 are provided in one housing has been illustrated, some functions of the AD converter 250, the signal processor 251, the index value acquirer 252, the determiner 253, the output controller 254, and the outputter 255 may be mounted in different devices. For example, the AD converter 250, the signal processor 251, the index value acquirer 252, and the determiner 253 may be provided in a first device, and the output controller 254 and the outputter 255 may be provided in a second device. In this case, the first device and the second device are connected to perform communication in a wired or wireless manner. The first device and the second device function as one attachment state determination apparatus 25.

### (Modification Example 2)

In the above-described embodiment, while a configuration in which the signal processor 251 converts the signal waveform of the time domain into the frequency spectrum by the fast Fourier transform processing on the signal waveform, and then, acquires the intensity information regarding the signal intensities in the different frequency bands has been illustrated, the signal processor 251 may be configured to acquire intensity information regarding signal intensities in different frequency bands using band-pass filters. With such a configuration, the attachment state determination apparatus 25 includes at least a first band-pass filter and a second band-pass filter. The first band-pass filter is a filter having a pass band in a low-frequency band. The second band-pass filter is a filter having a pass band in a high-frequency band. The signal processor 251 acquires intensity information in the low-frequency band on the basis of a signal having passed through the first band-pass filter and acquires intensity information in the high-frequency band on the basis of a signal having passed through the second band-pass filter. The first band-pass filter and the second band-pass filter may be provided as an analog circuit before an input to the AD converter 250 or may be provided as a digital filter after the AD converter 250. When the first band-pass filter and the second band-pass filter are provided as a digital filter after the AD converter 250, the first band-pass filter and the second band-pass filter are provided between the AD converter 250 and the signal processor 251.

With such a configuration, the fast Fourier transform processing does not need to be performed in the signal processor 251. Since the fast Fourier transform processing is processing that requires a high calculation load, it is possible to reduce a processing load in the attachment state determination apparatus 25.

### (Modification Example 3)

In the above-described embodiment, while a configuration in which the signal processor 251 converts the signal waveform of the time domain into the frequency spectrum by the fast Fourier transform processing on the signal waveform has been illustrated, the signal processor 251 may acquire a frequency spectrum by a method other than the fast Fourier transform processing. An example of the method other than the fast Fourier transform processing is processing of converting the signal waveform into a frequency such as wavelet transform. With such a configuration, the signal processor 251 has a time-frequency analyzer configured to calculate a time-frequency characteristic of a time-series signal of an elastic wave and acquires intensity information in different frequency bands of the elastic wave in a prescribed time range determined in advance.

### (Modification Example 4)

The determiner 253 may determine the attachment state of the sensor 20 using a trained model trained to output a determination result of the attachment state of the sensor 20 with the intensity information as an input. With such a configuration, the attachment state determination apparatus 25 may not include the index value acquirer 252. The determiner 253 inputs the intensity information acquired by the signal processor 251 to the trained model and determines a determination result output from the trained model as the attachment state of the sensor 20.

### (Modification Example 5)

In the above-described embodiment, while a case where the number of determination thresholds is one has been described as an example, the number of determination thresholds may be plural. With such a configuration, the determiner 253 may determine an attachment state at levels in at least three stages or more according to the number of determination thresholds exceeded by the index value among the plurality of determination thresholds. For example, when the attachment state is determined at levels in three stages, the determiner 253 may express the attachment state while attaching a level such as attachment state 1, attachment state 2, and attachment state 3 in an order of decreasing the goodness of the attachment state. When the index value is a numerical value indicating that the attachment state of the sensor is good, and the index value is set as a numerical value indicating that, as the numerical value is greater, the attachment state is good, and as the numerical value is smaller, the attachment state is defective, it is possible to evaluate that, as the number of determination thresholds exceeded by the index value is greater, the attachment state is good, and as the number of determination thresholds exceeded by the index value is smaller, the attachment is defective.

### (Modification Example 6)

In the above-described embodiment, while a configuration in which the low-frequency band and the high-frequency band with the resonance frequency of the sensor 20 sandwiched therebetween are set as the different frequency bands has been described as an example, a low-frequency band and a high-frequency band may be set without the resonance frequency of the sensor 20 sandwiched therebetween. Specifically, when the resonance frequency fr of the sensor 20 is sufficiently greater than the cutoff frequency of the high-pass filter in the attachment state determination apparatus 25, the high-frequency band may be set to a band slightly lower than the resonance frequency of the sensor 20. For example, when the resonance frequency fr of the sensor 20 is 300 kHz, a component in the vicinity of 20 kHz that is in the vicinity of the cutoff frequency of the high-pass filter in the attachment state determination apparatus 25 may be set as a low-frequency component, and a component in the vicinity of 100 kHz lower than 300 kHz that is the resonance frequency of the sensor 20 may be set as a high-frequency component. That is, a low-frequency band is a range including 20 kHz, and a high-frequency band is a range including 100 kHz. While these ranges are similar ranges to the ranges of the low-frequency band and the high-frequency band described in the embodiment, the present example is different from the embodiment in that, in the embodiment, the low-frequency band and the high-frequency band are divided with the resonance frequency of the sensor 20 sandwiched therebetween, but in the present example, the low-frequency band and the high-frequency band are divided without the resonance frequency of the sensor 20 sandwiched therebetween. The high-pass filter in the attachment state determination apparatus 25 is provided in the signal processor 251.

As described above, the plurality of determination thresholds may be provided. With such a configuration, the determiner 253 may determine the attachment state at levels in at least three stages according to the number of determination thresholds exceeded by the index value among the plurality of determination thresholds. For example, when the attachment state is determined at levels in three stages, the determiner 253 may express the attachment state while attaching a level like attachment state 1, attachment state 2, and attachment state 3 in an order of decreasing the goodness of the attachment state.

### (Modification Example 7)

In the above-described embodiment, a configuration in which the intensity information in the two frequency bands of the low-frequency band and the high-frequency band as the different frequency bands is acquired has been described. In contrast, the attachment state determination apparatus 25 may determine the attachment state by acquiring intensity information in each of three or more frequency bands as different frequency bands. With such a configuration, the signal processor 251 divides the frequency spectrum into the three or more frequency bands using the frequency spectrum. For example, when the frequency spectrum is divided into three frequency bands, the signal processor 251 may divided the frequency spectrum into a low-frequency band, a high-frequency band, and the rest of frequency band using the frequency spectrum. In regard to a way of division of three stages or more, the frequency spectrum may be divided into any frequency bands as long as the frequency bands do not overlap each other. Then, the signal processor 251 acquires, as intensity information, an amplitude value corresponding to each of the low-frequency band, the high-frequency band, and the rest of frequency band. The amplitude value in this case can be set to a statistic in each frequency band. The index value acquirer 252 extracts an approximate straight line passing through the low-frequency band, the high-frequency band, and the rest of frequency band acquired by the signal processor 251 and acquires a gradient a of the approximate straight line as an index value.

An example of a case where a gradient in a direction in which the amplitude increases as the frequency increases is set to be positive and a gradient in a direction in which the amplitude decreases as the frequency decreases is set to be negative will be described. In this case, the determiner 253 uses a determination threshold th, and when the index value a is smaller in gradient than the threshold th (that is, a < th), determines that the attachment state is good. On the other hand, the determiner 253 uses the determination threshold th, and when the index value a is greater in gradient than the threshold th (that is, a > th), determines that the attachment state is defective. The threshold th is, for example, 0.

The index value acquirer 252 may approximate, with a straight line, a frequency spectrum having a restricted frequency range and may acquire a gradient of the straight line as an index value. For example, when a frequency spectrum is acquired in a frequency range of 1 kHz to 1 MHz in the signal processor 251, the index value acquirer 252 can calculate a gradient and set the gradient as the index value a by performing linear approximation while restricting a frequency range to a range of 20 kHz that is the cutoff frequency of the high-pass filter in the attachment state determination apparatus 25 to 100 kHz that is a frequency sufficiently greater than 20 kHz.

As described above, a plurality of thresholds th may be provided. With such a configuration, the determiner 253 may determine an attachment state at level in at least three stages according to the number of thresholds th exceeded by the index value among the plurality of thresholds th. For example, when the attachment state is determined at levels in three stages, the determiner 253 may express the attachment state while attaching a level like attachment state 1, attachment state 2, and attachment state 3 in an order of decreasing the goodness of the attachment state.

According to at least one embodiment described above, the attachment state determination apparatus 25 includes the signal processor 251 configured to acquire the intensity information in the different frequency bands of the elastic wave detected by one or more sensors 20 configured to detect the elastic wave generated due to the impact applied by the impact applier 10 configured to apply the impact on the structure 50, and the determiner 253 configured to determine the attachment state of one or more sensors 20 on the basis of the intensity information acquired by the signal processor 251. Thereby, it is possible to determine the attachment state of the sensor with high accuracy.

Some of the processing that is executed by the attachment state determination apparatus 25 in the above-described embodiment may be realized by a computer. In this case, some of the processing may be realized by recording a program for realizing this function on a computer-readable recording medium and causing a computer system to read and execute the program recorded on the recording medium. It is assumed that the "computer system" described herein includes an operating system (OS) and hardware such as peripheral devices. The "computer-readable recording medium" refers to a flexible disk, a magneto-optical disk, a read only memory (ROM), a portable medium such as a CD-ROM, or a storage device such as a hard disk embedded in the computer system. In addition, the "computer-readable recording medium" may include a computer-readable recording medium that dynamically stores the program for a short time like a communication line when the program is transmitted via a network such as the Internet or a communication circuit such as a telephone circuit and a computer-readable recording medium that stores the program for a given time like a volatile memory inside the computer system to be a server or a client when the program is transmitted. The above-described program may be a program for realizing some of the above-described function, may be a program capable of realizing the above-described function in combination with a program already recorded on the computer system, or may be a program that is realized using a programmable logic device such as an FPGA.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Clause

1. A sensor attachment state determination apparatus comprising:
   a signal processor configured to acquire intensity information regarding signal intensities in different frequency bands of an elastic wave detected by one or more sensors configured to detect the elastic wave generated due to an impact applied by an impact applier configured to apply the impact to a structure; and
   a determiner configured to determine an attachment state of the one or more sensors on a basis of the intensity information acquired by the signal processor.
2. The sensor attachment state determination apparatus according to clause 1, further comprising:
   an index value acquirer configured to acquire an index value for determining the attachment state of the one or more sensors on a basis of the intensity information acquired by the signal processor,
   wherein the determiner is configured to determine the attachment state of the one or more sensors on a basis of the index value acquired by the index value acquirer.
3. The sensor attachment state determination apparatus according to clause 2,
   wherein the signal processor is configured to calculate a statistic of amplitude in each of a first frequency band and a second frequency band that is a frequency band different from the first frequency band, and
   the index value acquirer is configured to acquire, as the index value, a value of a ratio of the statistic of the amplitude in the first frequency band to the statistic of the amplitude in the second frequency band or a value of a difference between the statistic of the amplitude in the first frequency band and the statistic of the amplitude in the second frequency band.
4. The sensor attachment state determination apparatus according to clause 2,
   wherein the signal processor is configured to calculate an energy in each of a first frequency band and a second frequency band that is a frequency band different from the first frequency band, and
   the index value acquirer is configured to acquire, as the index value, a value of a ratio of the energy in the first frequency band to the energy in the second frequency band or a value of a difference between the energy in the first frequency band and the energy in the second frequency band.
5. The sensor attachment state determination apparatus according to clause 2,
   wherein the index value acquirer is configured to acquire, as the index value, a gradient of an approximate straight line passing through three or more different frequency bands on a basis of the intensity information acquired by the signal processor.
6. The sensor attachment state determination apparatus according to any one of clauses 2 to 5,
   wherein the determiner is configured to determine that the attachment state of the one or more sensors for which the index value is less than a determination threshold determined in advance is defective.
7. The sensor attachment state determination apparatus according to any one of clauses 2 to 5,
   wherein the determiner is configured to determine the attachment state of the one or more sensors in three stages or more on a basis of a plurality of determination thresholds for the index value.
8. The sensor attachment state determination apparatus according to any one of clauses 1 to 5,
   wherein the determiner is configured to input, using a trained model that is trained to output a determination result of the attachment state of the one or more sensors with the intensity information as an input, the intensity information acquired by the signal processor to the trained model and determine the determination result output from the trained model as the attachment state of the one or more sensors.
9. The sensor attachment state determination apparatus according to any one of clauses 1 to 5,
   wherein the signal processor is configured to calculate a frequency spectrum by converting a time-series signal of the elastic wave detected by the one or more sensors into a frequency domain and acquire the intensity information regarding the signal intensities in the different frequency bands of the elastic wave on a basis of the calculated frequency spectrum.
10. The sensor attachment state determination apparatus according to any one of clauses 1 to 5,
   wherein the signal processor has a time-frequency analyzer configured to calculate a time-frequency characteristic of a time-series signal of the elastic wave detected by the one or more sensors and is configured to acquire the intensity information regarding the signal intensities in the different frequency bands of the elastic wave in a prescribed time range determined in advance.
11. The sensor attachment state determination apparatus according to any one of clauses 1 to 5, further comprising:
   a plurality of band-pass filters having different pass bands,
   wherein the signal processor is configured to acquire the intensity information regarding the signal intensities in the different frequency bands of the elastic wave on a basis of a signal having passed through the plurality of band-pass filters.
12. The sensor attachment state determination apparatus according to any one of clauses 1 to 5,
   wherein the signal processor is configured to set a lowest frequency among the different frequency bands to a frequency lower than a resonance frequency of the one or more sensors.
13. The sensor attachment state determination apparatus according to any one of clauses 1 to 5,
   wherein the signal processor is configured to set a highest frequency among the different frequency bands to a frequency higher than a resonance frequency of the one or more sensors.
14. A sensor attachment state determination system comprising:
   an impact applier configured to apply an impact on a structure;
   one or more sensors configured to detect an elastic wave generated due to the impact applied by the impact applier;
   a signal processor configured to acquire the intensity information regarding the signal intensities in different frequency bands of the elastic wave detected by the one or more sensors; and
   a determiner configured to determine an attachment state of the one or more sensors on a basis of the intensity information acquired by the signal processor.
15. A sensor attachment state determination method comprising:
   applying an impact on a structure where one or more sensors are installed;
   detecting an elastic wave generated due to the applied impact;
   acquiring intensity information regarding signal intensities in different frequency bands of the detected elastic wave; and
   determining an attachment state of the one or more sensors on a basis of the acquired intensity information.

## Claims

1. A sensor attachment state determination apparatus (25) comprising:
a signal processor (251) configured to acquire intensity information regarding signal intensities in different frequency bands of an elastic wave detected by one or more sensors (20) configured to detect the elastic wave generated due to an impact applied by an impact applier configured to apply the impact to a structure; and
a determiner (253) configured to determine an attachment state of the one or more sensors (20)on a basis of the intensity information acquired by the signal processor (251).

2. The sensor attachment state determination apparatus (25) according to claim 1, further comprising:
an index value acquirer (252) configured to acquire an index value for determining the attachment state of the one or more sensors (20)on a basis of the intensity information acquired by the signal processor (251),
wherein the determiner (253) is configured to determine the attachment state of the one or more sensors (20)on a basis of the index value acquired by the index value acquirer (252).

3. The sensor attachment state determination apparatus (25) according to claim 2,
wherein the signal processor (251) is configured to calculate a statistic of amplitude in each of a first frequency band and a second frequency band that is a frequency band different from the first frequency band, and
the index value acquirer (252) is configured to acquire, as the index value, a value of a ratio of the statistic of the amplitude in the first frequency band to the statistic of the amplitude in the second frequency band or a value of a difference between the statistic of the amplitude in the first frequency band and the statistic of the amplitude in the second frequency band.

4. The sensor attachment state determination apparatus (25) according to claim 2,
wherein the signal processor (251) is configured to calculate an energy in each of a first frequency band and a second frequency band that is a frequency band different from the first frequency band, and
the index value acquirer (252) is configured to acquire, as the index value, a value of a ratio of the energy in the first frequency band to the energy in the second frequency band or a value of a difference between the energy in the first frequency band and the energy in the second frequency band.

5. The sensor attachment state determination apparatus (25) according to claim 2,
wherein the index value acquirer (252) is configured to acquire, as the index value, a gradient of an approximate straight line passing through three or more different frequency bands on a basis of the intensity information acquired by the signal processor (251).

6. The sensor attachment state determination apparatus (25) according to any one of claims 2 to 5,
wherein the determiner (253) is configured to determine that the attachment state of the one or more sensors (20)for which the index value is less than a determination threshold determined in advance is defective.

7. The sensor attachment state determination apparatus (25) according to any one of claims 2 to 5,
wherein the determiner (253) is configured to determine the attachment state of the one or more sensors (20) in three stages or more on a basis of a plurality of determination thresholds for the index value.

8. The sensor attachment state determination apparatus (25) according to any one of claims 1 to 5,
wherein the determiner (253) is configured to input, using a trained model that is trained to output a determination result of the attachment state of the one or more sensors (20) with the intensity information as an input, the intensity information acquired by the signal processor (251) to the trained model and determine the determination result output from the trained model as the attachment state of the one or more sensors (20).

9. The sensor attachment state determination apparatus (25) according to any one of claims 1 to 5,
wherein the signal processor (251) is configured to calculate a frequency spectrum by converting a time-series signal of the elastic wave detected by the one or more sensors (20) into a frequency domain and acquire the intensity information regarding the signal intensities in the different frequency bands of the elastic wave on a basis of the calculated frequency spectrum.

10. The sensor attachment state determination apparatus (25) according to any one of claims 1 to 5,
wherein the signal processor (251) has a time-frequency analyzer configured to calculate a time-frequency characteristic of a time-series signal of the elastic wave detected by the one or more sensors (20) and is configured to acquire the intensity information regarding the signal intensities in the different frequency bands of the elastic wave in a prescribed time range determined in advance.

11. The sensor attachment state determination apparatus (25) according to any one of claims 1 to 5, further comprising:
a plurality of band-pass filters having different pass bands,
wherein the signal processor (251) is configured to acquire the intensity information regarding the signal intensities in the different frequency bands of the elastic wave on a basis of a signal having passed through the plurality of band-pass filters.

12. The sensor attachment state determination apparatus (25) according to any one of claims 1 to 5,
wherein the signal processor (251) is configured to set a lowest frequency among the different frequency bands to a frequency lower than a resonance frequency of the one or more sensors (20).

13. The sensor attachment state determination apparatus (25) according to any one of claims 1 to 5,
wherein the signal processor (251) is configured to set a highest frequency among the different frequency bands to a frequency higher than a resonance frequency of the one or more sensors (20).

14. A sensor attachment state determination system (100) comprising:
an impact applier (10) configured to apply an impact on a structure;
one or more sensors (20) configured to detect an elastic wave generated due to the impact applied by the impact applier;
a signal processor (251) configured to acquire the intensity information regarding the signal intensities in different frequency bands of the elastic wave detected by the one or more sensors (20); and
a determiner (253) configured to determine an attachment state of the one or more sensors (20) on a basis of the intensity information acquired by the signal processor (251).

15. A sensor attachment state determination method comprising:
applying (S101) an impact on a structure where one or more sensors are installed;
detecting (S102) an elastic wave generated due to the applied impact;
acquiring (S104, S105) intensity information regarding signal intensities in different frequency bands of the detected elastic wave; and
determining (S107, S108, S109) an attachment state of the one or more sensors on a basis of the acquired intensity information.
